# EUROPÄISCHE PATENTSCHRIFT

(11) **EP 0 567 509 B1**
(45) Veröffentlichungstag und Bekanntmachung des Hinweises auf die Patenterteilung: **27.07.1994**
(21) Anmeldenummer: 92902907.2
(22) Anmeldetag: 23.01.1992
(51) Int. Cl.: B62D 29/00

(54) **PERSONENKRAFTWAGEN MIT SEITLICHEN TÜRSCHWELLERN**
PASSENGER CAR WITH LATERAL DOOR SILLS
VOITURE PARTICULIERE MUNIE DE BAS DE MARCHE LATERAUX

(30) Priorität: 26.01.1991 DE 4102353
(43) Veröffentlichungstag der Anmeldung: 03.11.1993
(73) Patentinhaber: AUDI AG, 85045 Ingolstadt (DE)
(72) Erfinder: WÄTZOLD, Peter, D-8071 Wettstetten (DE); ZAVOJAN, Anton, D-7101 Offenau (DE); KONRAD, Günter, D-6927 Bad Rappenau (DE); HOLL, Werner, D-7106 Neuenstadt 3 (DE)
(86) Internationale Anmeldenummer: EP9200138
(87) Internationale Veröffentlichungsnummer: WO9212890

(56) Entgegenhaltungen:
- EP-A- 0 043 228
- US-A- 1 723 518
- US-A- 2 809 050
- US-A- 4 203 611

## Beschreibung

Die Erfindung bezieht sich auf einen Personenkraftwagen mit seitlichen Türschwellern und mit Vordersitzen, die jeweils auf zwei Sitzschienen, einer inneren und einer äußeren, verschiebbar sind, von denen äußere, gegebenenfalls als Teil eines beider Sitzschienen umfassenden Unterrahmens, am einen Türschweller befestigt ist.

Bei bekannten Personenkraftwagen dieser Art ist die äußere Sitzschiene an den Türschweller angeschweißt. Dies ist jedoch nur möglich, wenn die Werkstoffe von Türschweller und Sitzschiene miteinander verschweißbar sind. Nachdem aber das Bestreben dahin geht, das Fahrzeuggewicht durch Einsatz von Leichtmetall zu verringern und für die Türschweller Leichtmetall-Strangpressprofile zu verwenden (EP-A 0 229 591) ist dieser Weg nicht gangbar, da die Sitzschiene aus Stahl bestehen muß und sich daher nicht an den Leichtmetall-Türschweller anschweißen läßt. Nachteilig ist auch, daß sich die Montagevereinfachung durch Zusammenfassen der beiden Sitzschienen zu einem Unterrahmen nicht verwirklichen läßt. Bei derartigen Konstruktionen ist es bekannt (DE-C 2 916 562) den Unterrahmen vorn und hinten an aus dem Bodenblech ausgeformten Querträgern zu befestigen. Nachteilig ist hierbei, daß die Fußfreiheit für die FrontPassagiere beeinträchtigt wird und das relativ dünne sodenblech bei einem Front-oder Heck-Aufprall die dabei auf die Sitzschienen wirkenden Kräfte nicht aufnehmen kann, sondern reißt, wenn nicht besondere Verstärkungen vorgesehen werden.

Der Erfindung liegt die Aufgabe zugrunde, einen Personenkraftwagen der gattungsgemäßen Art zu schaffen, der einerseits ein geringes Gewicht hat und bei dem andererseits eine sichere Halterung der Sitzschienen auch im Falle eines Front-oder Heck-Crashs sichergestellt ist.

Diese Aufgabe wird erfindungsgemäß dadurch gelöst, daß der Türschweller aus einem Leichtmetall-Strangpressprofil besteht, an den vordere und hintere Abstützlager aus Leichtmetall für die äußere Sitzschiene angeschweißt sind, und daß die Abstützlager einen nach oben stehenden Rand aufweisen, der in eine nach unten zu offene Längsnut des Strangpressprofils eingreift.

Bei dem erfindungsgemäßen Vorschlag wird durch die an sich bekannte Verwendung von Leichtmetall-Strangpressprofilen für die Türschweller das Fahrzeuggewicht gegenüber herkömmlichen Stahlblech-Konstruktionen verringert und durch das Anschweißen der Abstützlager und die zusätzliche formschlüssige Verbindung der Abstützlager mit dem Türschweller mittels der in die Längsnut eingreifenden Ränder Gewähr dafür gegeben, daß sich die Sitzschiene bei einem FrontAufprall nicht hinten bzw. bei einem Heck-Aufprall nicht vorn von dem Türschweller löst, was eintreten könnte, wenn die Abstützlager lediglich angeschweißt wären.

Die Anbringung der Längsnut bereitet bei einem Strangpressprofil keine zusätzlichen Kosten.

Ein Ausführungsbeispiel der Erfindung wird im folgenden auf unter Bezugnahme auf die Zeichnungen beschrieben. Es zeigt:
- Fig. 1: einen Abschnitt des Innenraumes eines Personenkraftwagens zwischen dem Fahrzeugtunnel und einem Türschweller in Draufsicht,

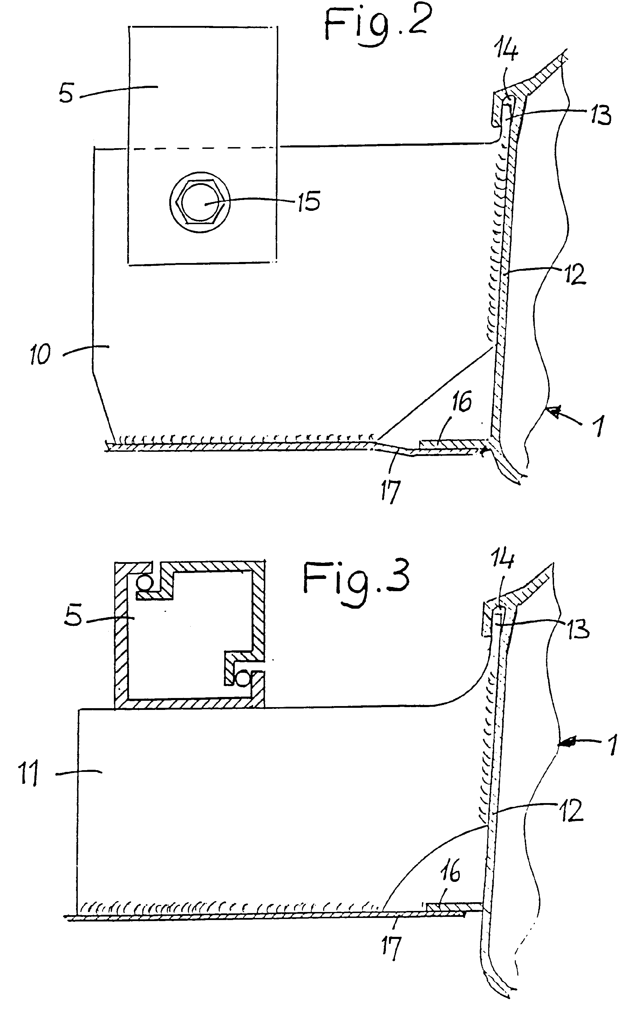

- Fig. 2: einen Schnitt entlang Linie 2-2 in Fig. 1 und
- Fig. 3: einen Schnitt entlang Linie 3-3 in Fig. 1.

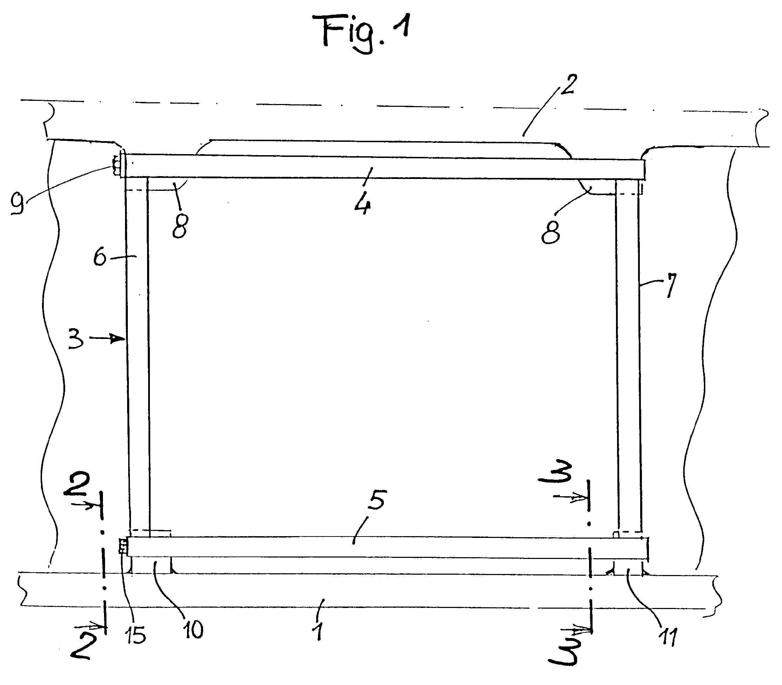

In Fig. 1 ist der Bereich eines Vordersitzes eines Personenkraftwagens in Draufsicht dargestellt. Dieser Bereich wird durch einen Türschweller 1 und einen Fahrzeugtunnel 2 begrenzt. Von dem Fahrzeugsitz ist nur der Unterrahmen 3 schematisch dargestellt, der aus zwei Längsschienen 4 und 5 sowie diese verbindenden Querträgern 6 und 7 besteht. Auf den Unterrahmen 3 ist der eigentliche, nicht dargestellte Sitz längsverschiebbar aufgesetzt. Die Querträger 6 und 7 dienen lediglich der Montageerleichterung und sind für die Funktion nicht erforderlich, da der Sitz auf den Sitzschienen 4 und 5 verschiebbar geführt ist. Die innere, d. h. in Fig. 1 obere Sitzschienen 4 liegt mit ihren Enden auf Konsolen 8, 8′ auf, die aus dem Fahrzeugtunnel 2 ausgeformt sind, und sie ist mit der vorderen Konsole 8 durch eine Schraube 9 und mit der hinteren Konsole 8′ durch einen micht gezeigten Haken etwa entsprechend der vorgenannten DE-C 2 916 562 formschlüssig verbunden. Eine derartige Befestigung ist für die äußere, d. h. in Fig. 1 untere Sitzschiene 5 nicht möglich, da der Türschweller 1 aus einem Leichtmetall-Strangpressprofil besteht, also über seine ganze Länge den gleichen Querschnitt aufweist. Daher sind zur Befestigung der Sitzschiene 5 vordere und hintere Abstützlager 10 und 11 aus Leichtmetall an die Innenwand 12 des Türschwellers 1 angeschweißt. Eine zusätzliche formschlüssige Verbindung zwischen den Abstützlagern 10, 11 und dem Türschweller 1 wird dadurch erreicht, daß die Abstützlager einen nach oben vorstehenden Rand 13 aufweisen, der in eine nach unten zu offene Längsnut 14 des Strangpressprofils des Türschwellers 1 eingreift. Die Sitzschiene 5 ist an ihrem vorderen Ende durch eine Schraube 15 mit dem vorderen Abstützlager 10 und an ihrem hinteren Ende wie die innere Sitzschiene 4 durch einen Haken mit dem hinteren Abstützlager 11 verbunden.

Durch das Eingreifen der Ränder 13 der Abstützlager 10, 11 in die Längsnut 14 wird sichergestellt, daß sich die Sitzschiene 5 bei einem Front- oder einem Heckaufprall nicht von dem Türschweller 1 lösen kann, selbst wenn die Verschweißung mit der Innenwand 12 des Türschwellers brechen würde.

An einen Fortsatz 16 des Strangpressprofils des Schwellers 1 ist ein Bodenblech 17 angeschweißt, mit dem die Abstützlager 10, 11 ebenfalls verschweißt sind.

## Patentansprüche

1. Personenkraftwagen mit seitlichen Türschwellern und mit Vordersitzen, die jeweils auf einer inneren und einer äußeren Sitzschiene (4 bzw. 5) verschiebbar sind, von denen die äußere Sitzschiene (5), gegebenenfalls als Teil eines beide Sitzschiene umfassenden Unterrahmens (3) am benachbarten Türschweller (1) befestigt ist, **dadurch gekennzeichnet**, daß der Türschweller (1) aus einem Leichtmetall-Strangpressprofil besteht, an dem vordere und hintere Abstützlager (10, 11) für die äußere Sitzschiene (5) angeschweißt sind, und daß die Abstützlager (10, 11) einen nach oben vorstehenden Rand (13) aufweisen, der in eine nach unten zu offene Längsnut (14) des Strangpressprofils des Türschwellers (1) eingreift.

2. Personenkraftwagen nach Anspruch 1, dadurch gekennzeichnet, daß an den Türschweller (1) ein Bodenblech (17) angeschweißt ist, an dem seinerseits die Abstützlager (10, 11) zusätzlich angeschweißt sind.

## Claims

1. Passenger car with lateral door sills and with front seats which can each slide on an inner and an outer seat rail (4 and 5, respectively), the outer seat rail (5) of which is secured to the adjacent door sill (1), possibly as part of a subframe (3) comprising the two seat rails, characterised in that the door sill (1) consists of a light-metal extruded section, to which front and rear support bearings (10, 11) for the outer seat rail (5) are welded, and that the support bearings (10, 11) comprise an upwards projecting edge (13) which engages in a downwards facing longitudinal groove (14) in the extruded section of the door sill (1).

2. Passenger car according to claim 1, characterised in that a floor panel (17) is welded to the door sill (1), to which panel the support bearings (10, 11) are also welded.

## Revendications

1. Voiture particulière avec des bas de marche latéraux et des sièges avant qui peuvent être déplacés respectivement sur un rail de siège intérieur et un rail de siège extérieur (4 et respectivement 5), dont le rail de siège extérieur (5) est fixé sur le bas de marche (1) voisin, éventuellement en tant qu'élément d'un cadre inférieur (3) comprenant les deux rails de siège, **caractérisée en ce** que le bas de marche (1) est constitué d'un profilé filé de métal léger sur lequel sont soudés des paliers d'appui avant et arrière (10, 11) pour le rail de siège extérieur (5), et que les paliers d'appui (10, 11) comportent un bord (13) en saillie vers le haut qui s'engage dans une rainure longitudinale (14) du profilé filé du bas de marche (1) ouverte vers le bas.

2. Voiture particulière selon la revendication 1, caractérisée en ce que sur le bas de marche (1) est soudé un panneau de fond (17) sur lequel sont soudés, en plus, les paliers d'appui (10, 11).
